# EUROPÄISCHE PATENTSCHRIFT

(11) **EP 2 834 913 B1**
(45) Veröffentlichungstag und Bekanntmachung des Hinweises auf die Patenterteilung: **01.03.2017**
(21) Anmeldenummer: 13709375.3
(22) Anmeldetag: 05.03.2013
(51) Int. Cl.: H02P 3/06, H02P 3/18, H02P 25/14

(54) **VERFAHREN UND VORRICHTUNG ZUM ELEKTRODYNAMISCHEN BREMSEN EINES UNIVERSALMOTORS**
METHOD AND DEVICE FOR ELECTRODYNAMIC BRAKING OF A UNIVERSAL MOTOR
PROCÉDÉ ET DISPOSITIF DE FREINAGE ÉLECTRODYNAMIQUE D'UN MOTEUR UNIVERSEL

(30) Priorität: 05.04.2012 DE 102012205728
(43) Veröffentlichungstag der Anmeldung: 11.02.2015
(73) Patentinhaber: Robert Bosch GmbH, 70442 Stuttgart (DE)
(72) Erfinder: WISZNIEWSKI, Jacek, 70771 Leinfelden-Echterdingen (DE); POGORZELSKI, Kamil, 70176 Stuttgart (DE)
(86) Internationale Anmeldenummer: PCT/EP2013/054423
(87) Internationale Veröffentlichungsnummer: WO 2013/149780

(56) Entgegenhaltungen:
- WO-A2-2011/076827

## Beschreibung

Die Erfindung betrifft ein Verfahren und eine Vorrichtung zum elektrodynamischen Bremsen eines Universalmotors.

### Stand der Technik

Ein Verfahren zum elektrodynamischen Bremsen eines Universalmotors ist beispielsweise aus der WO 2011/076827 bekannt. Nachteiliger weise passt sich das dort offenbarte Verfahren nicht an Änderungen der Drehzahl des Universalmotors durch äußere Einflüsse, wie beispielsweise Verschleiß, Alterung, unterschiedliche Werkzeuge oder Toleranzen an. Dies kann zu unterschiedlichen Bremszeiten und/oder erhöhten Belastungen des Kollektors des Universalmotors führen.

### Offenbarung der Erfindung

Es ist daher eine Aufgabe der vorliegenden Erfindung, ein verbessertes Verfahren zum elektrodynamischen Bremsen eines Universalmotors bereitzustellen.

Erfindungsgemäß wird die Aufgabe mit einem Verfahren nach Anspruch 1 gelöst.

Ein Vorteil des erfindungsgemäßen Verfahrens besteht darin, dass durch ein Anpassen des Zündwinkels an die jeweilige aktuelle Drehzahl Bremsvorgänge des Universalmotors wesentlich gleichmäßiger ausgebildet sein können. Zudem kann eine Belastung des Ankers durch unerwünschte Induktionsströme bedeutend verringert sein, was eine Betriebsdauer des Universalmotors vorteilhaft erhöhen kann. Im Ergebnis können im Bremsvorgang vorteilhaft individuelle Betriebsumstände des Universalmotors berücksichtigt werden.

Erfindungsgemäß wird je nach Abweichung ein definierter Zündwinkel zum eingestellten Zündwinkel addiert oder subtrahiert wird. Dadurch kann vorteilhaft eine Regelungsreserve definiert werden, mittels der ein Über- oder Unterschreiten der Solldrehzahl im elektrodynamischen Bremsbetrieb entsprechend berücksichtigt werden kann.

Eine bevorzugte Weiterbildung des Verfahrens sieht vor, dass der Solldrehzahlverlauf eine maximale Belastung des Universalmotors berücksichtigt. Auf diese Art und Weise können geringere Belastungen des Universalmotors als die maximale Belastung auf sicher gehandhabt werden. Eine Sicherheitsstufe für den Universalmotor ist dadurch vorteilhaft erhöht.

Eine bevorzugte Weiterbildung des Verfahrens sieht vor, dass die maximale Belastung eine maximale Solldrehzahl und ein maximales Trägheitsmoment für den Universalmotor aufweist. Dadurch kann ein Belastungsszenario des Universalmotors weitestmöglichst im Sinne eines "Worst-Case"-Szenarios ausgebildet werden.

Erfindungsgemäß ist für den Fall, dass die Abweichung ein definiertes Maß übersteigt, Zündwinkel des Halbleiterschalters gemäß einer indizierten Zuordnung von Zündwinkeln zu Solldrehzahlen des Universalmotors eingestellt werden, wobei auf einen Zündwinkel in der Zuordnung indexübergreifend zugegriffen wird. Vorteilhaft können dadurch auch große, in der Regel von extern verursachten Drehzahländerungen des Universalmotors während des Bremsbetriebs durch entsprechend große Änderungen des Zündwinkels des Halbleiterschalters berücksichtigt werden.

Erfindungsgemäß werden bei großen Drehzahlreduktionen innerhalb der indizierten Zuordnung Sprünge über mehrere Indizes hinweg durchgeführt.

Weiterbildungen des Verfahrens sehen vor, dass die Zuordnung als eine Tabelle oder eine Geraden-Approximation ausgebildet ist. Dadurch kann die Zuordnung vorteilhaft auf unterschiedliche technische Arten implementiert werden.

Gemäß einem weiteren Aspekt wird die Aufgabe gelöst mit einer Vorrichtung zum elektrodynamischen Bremsen eines Universalmotors, aufweisend:
- einen Drehzahlsensor zum permanenten Ermitteln einer Drehzahl des Universalmotors;
- einen Halbleiterschalter, mit dem ein Anker des Universalmotors temporär, periodisch zum Bremsen des Universalmotors kurzgeschlossen wird, wobei mittels einer in einer Steuerungseinrichtung angeordneten Regelungseinrichtung Zündwinkel des Halbleiterschalters derart geregelt werden, dass die Drehzahl mit einer minimalen Abweichung an eine Drehzahl eines Solldrehzahlverlaufs angepasst wird.

Die Erfindung wird im Folgenden mit weiteren Merkmalen und Vorteilen anhand von mehreren Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen.

In den Figuren zeigt:
- Fig. 1: ein Prinzipschaltbild einer elektrodynamischen Bremseinrichtung für einen Universalmotor, mit der das erfindungsgemäße Verfahren ausgeführt werden kann;
- Fig. 2: einen schematischen Zeitverlauf von Kennwerten eines Universalmotors in einem herkömmlichen elektrodynamischen Bremsbetrieb; und
- Fig. 3: einen schematischen Zeiterlauf von Kennwerten eines Universalmotors in einem erfindungsgemäßen elektrodynamischen Bremsbetrieb.

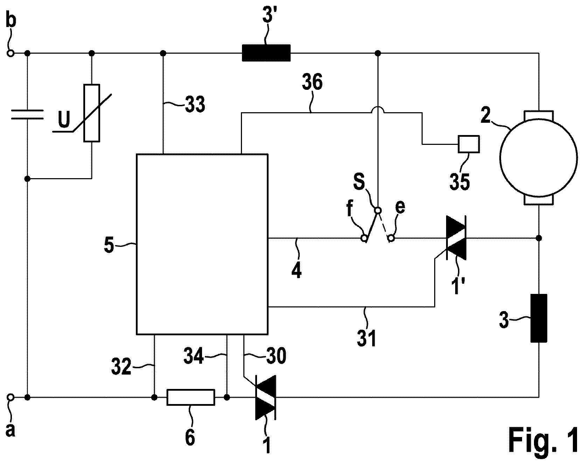

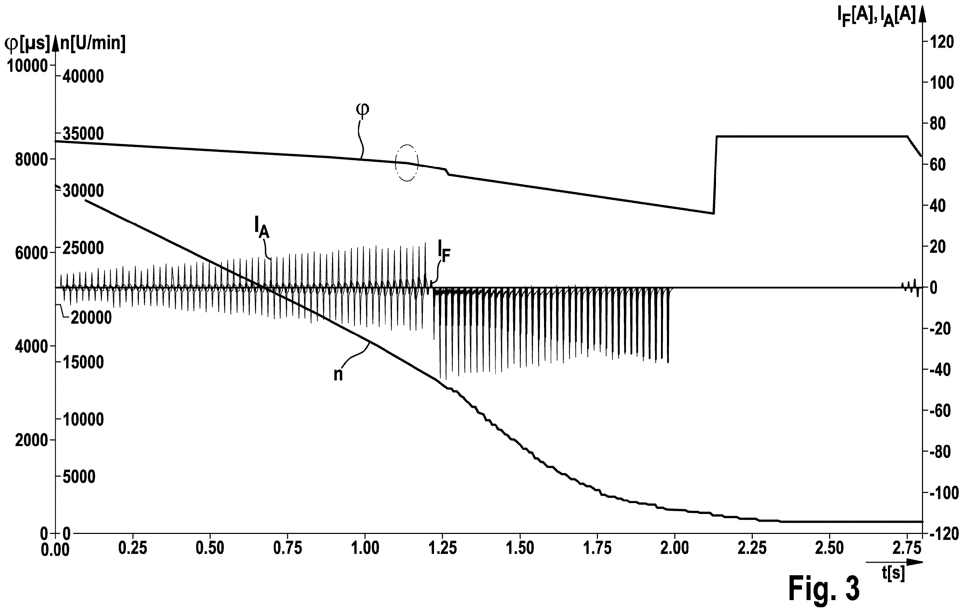

Fig. 1 zeigt ein Prinzipschaltbild einer elektrodynamischen Bremsvorrichtung für einen elektrischen Universalmotor, mit der das erfindungsgemäße Verfahren ausgeführt werden kann. Die Vorrichtung entspricht im Wesentlichen einer in der WO 2011/076827 offenbarten Anordnung, die dort auch detailliert beschrieben ist. Eine elektronische Steuerungseinrichtung 5 kann beispielsweise als eine Mikrocontrollerschaltung ausgebildet sein. Innerhalb der elektronischen Steuerungseinrichtung 5 ist eine Regelungseinrichtung vorzugsweise softwaretechnisch ausgebildet. Mittels der elektronischen Steuerungseinrichtung 5 kann ein regelungstechnisches Anpassen des Zündwinkels des Halbleiterschalters 1' durchgeführt werden, wobei die Wirkungsweise dieser Anpassung weiter unten mit Bezugnahme auf Fig. 3 näher beschrieben wird.

Ferner weist die elektrodynamische Bremsvorrichtung innerhalb der elektronischen Steuerungseinrichtung 5 eine indizierte Zuordnung (nicht dargestellt) auf. Die Zuordnung ist vorzugsweise software- oder hardwaretechnisch realisiert und umfasst einen Solldrehzahlverlauf mit Kombinationen von Zündwinkeln ϕ des zweiten elektronischen Halbleiterschalters 1' mit den Zündwinkeln ϕ entsprechenden Drehzahlen des Universalmotors aus einem zuvor ermittelten, idealen Bremsbetrieb des Universalmotors. Die genannte indizierte Zuordnung kann beispielsweise als eine Tabelle oder als eine Geraden-Approximation von wenigstens zwei Geraden ausgebildet sein. Es versteht sich von selbst, dass die genannte Zuordnung auf jede bekannte Weise ausgebildet sein kann.

Ein Drehzahlsensor 35 ist zu einer permanenten Ermittlung der Drehzahl n des Universalmotors im Bremsbetrieb vorgesehen. Auf weitere Schaltungs- und Funktionsdetails der in Fig. 1 gezeigten Anordnung wird im Folgenden, da sie bereits aus der WO 2011/076827 bekannt sind, nicht eingegangen.

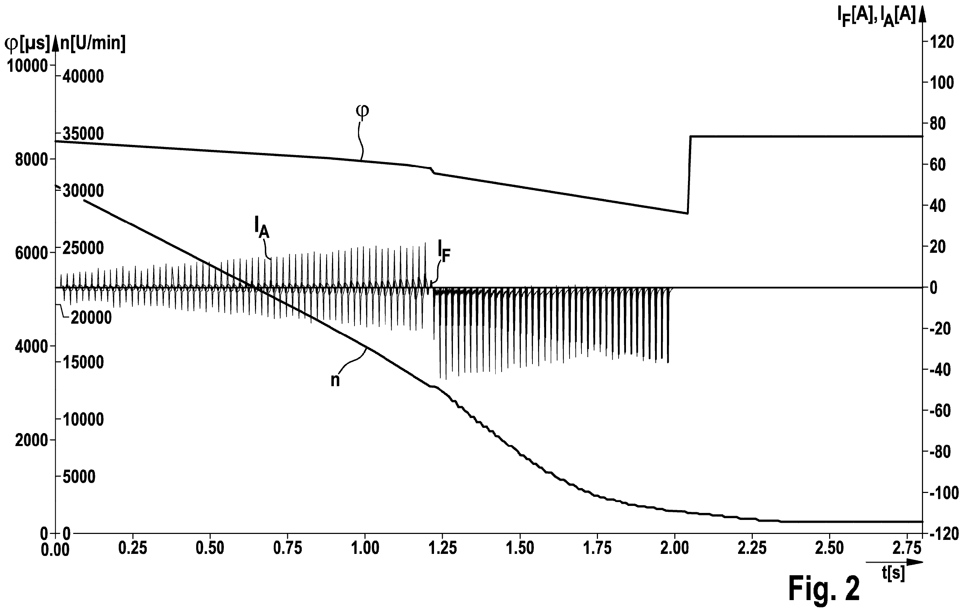

Fig. 2 zeigt ein prinzipielles Zeitdiagramm mit Kennwerten eines Universalmotors während eines herkömmlichen elektrodynamischen Bremsbetriebs, der beispielsweise mit der elektrodynamischen Bremseinrichtung aus Fig. 1 durchgeführt werden kann. Im Bremsbetrieb des Universalmotors wird in jeder Halbwelle der Netzspannung in einer Phasenanschnittsteuerung der erste Halbleiterschalter 1 gezündet und nach einer kurzen Verzögerung der zweite Halbleiterschalter 1'. Dabei wird in einem Phasenanschnittbetrieb ein Zündwinkel ϕ des zweiten Halbleiterschalters 1' gemäß einem in der Zuordnung hinterlegten, vorgegebenen Zündwinkelverlauf am zweiten Halbleiterschalter 1' eingestellt. Voraussetzung für jedes Zünden des zweiten Halbleiterschalters 1' ist jeweils, dass zuvor der erste Halbleiterschalter 1 gezündet bzw. durchgeschaltet wurde.

Man erkennt in Fig. 2, dass eine Drehzahl n des Universalmotors während des elektrodynamischen Bremsbetriebs von ca. 30.000 U/min (Umdrehungen/Minute) auf ca. 1.000 U/min abfällt. Ein zeitlicher Verlauf des Ankerstroms I_{A} bzw. ein Verlauf des Feldstroms I_{F} repräsentieren Stromaufnahmen des Universalmotors im Bremsbetrieb, wobei eine Bremswirkung auf den Universalmotor im Wesentlichen vom Ankerstrom I_{A} ausgeht. Bei ungefähr 1,15 s setzt aufgrund des bereits starken Drehzahlabfalls ein sogenannter "Halbwellenbetrieb" ein, in welchem der zweite Halbleiterschalter 1 'nur noch in jeder zweiten Halbwelle der Netzspannung gezündet wird.

Der in Fig. 2 dargestellte herkömmliche Bremsbetrieb des Universalmotors weist als großen Nachteil den Umstand auf, dass der Zündwinkel ϕ des zweiten Halbleiterschalters 1' stets unveränderlich gemäß dem vordefinierten, idealen Zündwinkelverlauf eingestellt wird. Mittels des starren Zündwinkelverlaufs können daher keinerlei individuelle Betriebsumstände des Universalmotors, wie z.B. sich ändernde Viskositäten von benutzten Schmiermitteln, Fertigungstoleranzen, Belastungen durch unterschiedliche Werkzeuge, Temperaturen usw., die allesamt ein Betriebsverhalten des Universalmotors beeinflussen können, berücksichtigt werden. Durch das starre Bremsschema können nachteilig unterschiedliche Bremszeiten und unter Umständen ein erhöhtes Bürstenfeuer und damit ein erhöhter Verschleiß des Kommutators des Universalmotors resultieren, wodurch eine Betriebsdauer des Universalmotors beträchtlich verkürzt sein kann.

Erfindungsgemäß ist zur Behebung der obengenannten Nachteile vorgesehen, dass während des Bremsbetriebs des Universalmotors eine Drehzahl n mittels des Drehzahlsensors 35 permanent ermittelt und mit dem Solldrehzahlverlauf, der in der Zuordnung hinterlegt ist, verglichen wird.

Falls bei dem genannten Vergleich der Drehzahlen eine Abweichung der ermittelten Drehzahl n von der zum jeweiligen Zeitpunkt erwarteten Solldrehzahl detektiert wird, ist erfindungsgemäß vorgesehen, dass die Regelungseinrichtung verwendet wird, um den Zündwinkel ϕ des zweiten Halbleiterschalters 1' nachzuregeln. Die genannte Regelung weist eine gewisse begrenzte, dimensionierbare Regelreserve auf. Im Falle eines Abweichens von der idealen Drehzahl wird zum gerade eingestellten Zündwinkel ein der Drehzahldifferenz entsprechender Zündwinkel entweder addiert oder subtrahiert. Auf diese Weise wird der Zündwinkel ϕ des zweiten elektronischen Halbleiterschalters 1' an die tatsächliche Drehzahl n stets bestmöglich angepasst. Es wird erfindungsgemäß also angestrebt, mittels der Regelungseinrichtung denjenigen Zündwinkel ϕ für den zweiten Halbleiterschalter 1' einzustellen, der sich dadurch auszeichnet, dass er eine Drehzahl des Universalmotors erzeugt, die geringstmöglich von der idealen Solldrehzahl abweicht.

Bei der Definition des idealen Bremsverlaufs wird ein Mittelweg dahingehend angestrebt, dass einerseits die Bremszeit möglichst kurz gehalten wird, anderseits aber zum Zwecke eines geringen Verschleißes auch der Strom über den Anker 2 möglichst gering gehalten wird. Für den Fall, dass die im Bremsbetrieb des Universalmotors ermittelte Drehzahl im Wesentlichen der Solldrehzahl entspricht, wird - wie in bereits bekannter Weise - eine sequenzielle Abarbeitung der Zündwinkel ϕ innerhalb der Zuordnung Z durchgeführt.

Ein erfindungsgemäßer Verlauf der Kennwerte Zündwinkel, Drehzahl, Ankerstrom und Feldstrom ist im Prinzip in Fig. 3 dargestellt. In Zeitverlauf von Fig. 3 ist die genannte, zum Beispiel von extern bewirkte geringfügige Reduktion der Drehzahl n bei ungefähr 1,1 s des Bremsbetriebs erkennbar (mittels einer grafischen Markierung hervorgehoben). Der genannte Drehzahlabfall kann beispielsweise durch eine externe Krafteinwirkung auf den Universalmotor, beispielsweise durch ein vom Universalmotor angetriebenes Werkzeug verursacht sein.

Als Reaktion darauf wird mittels der Regelungseinrichtung der Zündwinkel derart nachgeregelt bzw. korrigiert, dass die daraus resultierende Drehzahl des Universalmotors der hinterlegten idealen Drehzahl bestmöglich angenähert ist bzw. dieser entspricht. Die aktuelle Drehzahl n wird mittels des Drehzahlsensors 35 in jeder Halbwelle der Netzspannung ermittelt und mit der in der Zuordnung Z hinterlegten idealen Solldrehzahl während des Bremsvorgangs verglichen.

Im Vergleich zur Einstellung der Zündwinkel ϕ des Zeitverlaufs von Fig. 2 ändert der Zündwinkel ϕ erfindungsgemäß also seinen zeitlichen Verlauf, um dadurch in flexibler Weise an die aktuelle Drehzahl n des Universalmotors angepasst zu werden. Vorteilhaft kann dadurch der Bremsvorgangs vergleichmäßigt und ein Stromfluss aufgrund von elektromagnetischen Induktionsvorgängen innerhalb des Ankers reduziert sein. Dies kann bei leichteren Werkzeugen vorteilhaft einen nachteiligen Einfluss auf den Kollektor deutlich reduzieren.

Mittels der Erfindung ist es also vorteilhaft möglich, leicht unterschiedliche mechanische Widerstände von unterschiedlichen Elektrowerkzeugen entsprechend zu berücksichtigen. Vorteilhaft werden mittels der Erfindung geringfügige Drehzahländerungen und/oder Fertigungstoleranzen und/oder eine Werkzeugalterungen berücksichtigt. Eine Feinanpassung des Zündwinkels ϕ ist auf diese Weise vorteilhaft auf einfache Weise möglich.

Der genannte Solldrehzahlverlauf berücksichtigt vorzugsweise eine maximale Belastung des Universalmotors in einem "Worst-Case"-Szenario. Zu diesem Zweck wird bei einem Bestimmungsvorgang der Zuordnung beispielsweise der Universalmotor mit einem schweren Werkzeug, z.B. einer Trennscheibe mit maximalem Durchmesser oder einem Hammer mit einem größtmöglichen Meißel ausgerüstet und auf Maximaldrehzahl gebracht. Danach wird ein idealer Bremsvorgang des Universalmotors ermittelt, wobei der Bremsvorgang möglichst nicht durch äußere Einflüsse beeinflusst werden sollte. Die dabei ermittelten Wertekombinationen für die Zündwinkel ϕ und die Solldrehzahlen werden in geeigneter Form in der Zuordnung hinterlegt.

Vorzugsweise sind die Regelungseinrichtung und die Zuordnung innerhalb der Steuerungseinrichtung 5 softwaretechnisch als ein Computerprogramm ausgebildet. Es ist auch möglich, die Regelungseinrichtung und die Zuordnung auf bekannte Arten alternativ zu implementieren. Auf diese Weise ergibt sich für das erfindungsgemäße Verfahren lediglich ein geringer Aufwand an zusätzlicher Rechenleistung bzw. an Halbleiterspeicher. Vorteilhaft ist für das erfindungsgemäße Verfahren somit keinerlei Hardware-Mehraufwand erforderlich.

Bei großen Drehzahlreduktionen kann es unter Umständen auch erforderlich sein, dass innerhalb der indizierten Zuordnung Sprünge über mehrere Indizes hinweg durchgeführt werden, um auf den passenden Zündwinkel ϕ für die Zündung des zweiten Halbleiterschalter 1' zuzugreifen.

Zusammenfassend wird mit der Erfindung ein verbessertes elektrodynamisches Verfahren zum Bremsen eines Universalmotors vorgeschlagen, bei welchem ein Zündwinkelverlauf eines Halbleiterschalters gemäß der tatsächlichen, aktuellen Drehzahl während des Bremsvorgangs nachgeregelt und eingestellt wird. Im Prinzip ist es vorteilhaft auch möglich, dass das erfindungsgemäße Verfahren bei Drehzahlerhöhungen während des Bremsvorgangs anwendbar ist.

Obwohl die Erfindung anhand eines Universalmotors beschrieben wurde, versteht es sich von selbst, dass die Erfindung für jegliche Typen von allgemeinen Elektromotoren mit Anker/Läufer, welche eine Drehzahlerfassung und eine elektronische Bremse aufweisen, verwendet werden kann.

Ferner versteht es sich von selbst, dass die Fig. 1 gezeigte prinzipielle Anordnung zur Ausführung des erfindungsgemäßen Verfahrens lediglich beispielhaft ist. Als erste und zweite elektronische Halbleiterschalter 1,1' können statt der gezeigten Triacs auch Thyristoren, MOSFETs, IGBTs oder sonstige Leistungshalbleiterschalter in jeweils geeigneter Anzahl verwendet werden.

## Patentansprüche

1. Verfahren zum elektrodynamischen Bremsen eines Universalmotors, aufweisend folgende Schritte während eines Bremsbetriebs:
- permanentes Ermitteln einer Drehzahl des Universalmotors;
- temporäres, periodisches Kurzschließen eines Ankers (2) des Universalmotors mittels eines Halbleiterschalters (1'), wobei mittels einer Regelungseinrichtung Zündwinkel des Halbleiterschalters (1') derart geregelt werden, dass zur Erzielung einer minimalen Abweichung der ermittelten Drehzahl von einer Drehzahl eines Solldrehzahlverlaufs je nach Abweichung ein definierter Zündwinkel zum eingestellten Zündwinkel addiert oder subtrahiert wird, wobei für den Fall, dass die Abweichung zwischen der ermittelten Drehzahl und der Drehzahl gemäß Solldrehzahlverlauf ein definiertes Maß übersteigt, die Zündwinkel des Halbleiterschalters (1') gemäß einer indizierten Zuordnung (Z) von Zündwinkeln zu Solldrehzahlen des Universalmotors derart eingestellt werden, dass bei großen Drehzahlreduktionen innerhalb der indizierten Zuordnung (Z) Sprünge über mehrere Indizes hinweg durchgeführt werden können.

2. Verfahren nach Anspruch 1, wobei der Solldrehzahlverlauf eine maximale Belastung des Universalmotors berücksichtigt.

3. Verfahren nach Anspruch 2, wobei die maximale Belastung eine maximale Solldrehzahl und ein maximales Trägheitsmoment für den Universalmotor aufweist.

4. Verfahren nach Anspruch 1, wobei die Zuordnung (Z) als eine Tabelle ausgebildet ist.

5. Verfahren nach Anspruch 5, wobei die Zuordnung (Z) als eine Geraden-Approximation ausgebildet ist.

6. Computerprogrammprodukt mit Programmcodemitteln zur Durchführung des Verfahrens nach einem der Ansprüche 1 bis 4, wenn es auf einer elektronischen Steuerungseinrichtung (5) abläuft oder auf einem computerlesbaren Datenträger gespeichert ist.

## Claims

1. Method for electrodynamic braking of a universal motor, having the following steps during a braking operation:
- continuously ascertaining a rotational speed of the universal motor;
- temporarily, periodically short-circuiting an armature (2) of the universal motor by means of a semiconductor switch (1'), wherein firing angles of the semiconductor switch (1') are regulated by means of a regulating device in such a way that, in order to achieve a minimal deviation of the ascertained rotational speed from a rotational speed of a target rotational speed profile, depending on the deviation, a defined firing angle is added to or subtracted from the set firing angle, wherein, in the case that the deviation between the ascertained rotational speed and the rotational speed according to the target rotational speed profile exceeds a defined size, the firing angles of the semiconductor switch (1') are set according to an indexed mapping (Z) of firing angles to target rotational speeds of the universal motor, in such a way that, in the event of large reductions in rotational speed, jumps across multiple indices within the indexed mapping (Z) can be carried out.

2. Method according to Claim 1, wherein the target rotational speed profile takes into account a maximum loading of the universal motor.

3. Method according to Claim 2, wherein the maximum loading has a maximum target rotational speed and a maximum moment of inertia for the universal motor.

4. Method according to Claim 1, wherein the mapping (Z) is designed as a table.

5. Method according to Claim 5, wherein the mapping (Z) is designed as a straight-line approximation.

6. Computer program product having program code means for carrying out the method according to one of Claims 1 to 4, it if runs on an electronic control device (5) or is stored on a computer-readable data carrier.

## Revendications

1. Procédé de freinage électrodynamique d'un moteur universel, présentant les étapes suivantes lors d'une opération de freinage:
- détermination permanente d'une vitesse de rotation du moteur universel;
- mise en court-circuit temporaire périodique d'un induit (2) du moteur universel au moyen d'un commutateur à semi-conducteur (1'), dans lequel on régule au moyen d'un dispositif de régulation des angles d'allumage du commutateur à semi-conducteur (1') de telle manière que, pour obtenir un écart minimal de la vitesse de rotation déterminée par rapport à une vitesse de rotation d'une marche à une vitesse de rotation de consigne, on ajoute ou on soustrait, selon l'écart, un angle d'allumage défini à ou de l'angle d'allumage réglé, dans lequel, pour le cas où l'écart entre la vitesse de rotation déterminée et la vitesse de rotation selon la marche à une vitesse de rotation de consigne dépasse une valeur définie, on règle les angles d'allumage du commutateur à semi-conducteur (1') selon une association indicée (Z) des angles d'allumage à des vitesses de rotation de consigne du moteur universel, de telle manière que, en cas de grandes réductions de vitesse de rotation à l'intérieur de l'association indicée (Z), on puisse effectuer des sauts par-delà plusieurs indices.

2. Procédé selon la revendication 1, dans lequel la marche à une vitesse de rotation de consigne tient compte d'une charge maximale du moteur universel.

3. Procédé selon la revendication 2, dans lequel la charge maximale présente une vitesse de rotation de consigne maximale et un moment d'inertie maximal pour le moteur universel.

4. Procédé selon la revendication 1, dans lequel l'association (Z) est réalisée sous la forme d'une table.

5. Procédé selon la revendication 5, dans lequel l'association (Z) est réalisée sous la forme d'une approximation linéaire.

6. Produit de programme informatique avec des moyens de code de programme pour la mise en oeuvre du procédé selon l'une quelconque des revendications 1 à 4, lorsqu'il est exécuté sur un dispositif de commande électronique (5) ou lorsqu'il est mémorisé sur un support de données lisible par ordinateur.
